Europäisches Patentamt
European Patent Office
Office européen des brevets

(11) Publication number: **0 293 087 A1**

(12) # EUROPEAN PATENT APPLICATION

(21) Application number: 88303814.3

(51) Int. Cl.4: **H01B 1/12**

(22) Date of filing: **27.04.88**

(30) Priority: **30.04.87 JP 109508/87**
**26.06.87 JP 160246/87**
**04.02.88 JP 25466/88**

(43) Date of publication of application:
**30.11.88 Bulletin 88/48**

(84) Designated Contracting States:
**AT BE CH DE FR GB IT LI NL**

(71) Applicant: **SUMITOMO CHEMICAL COMPANY, LIMITED**
**15 Kitahama 5-chome Higashi-ku**
**Osaka-shi Osaka 541(JP)**

(72) Inventor: **Ohmae, Tadayuki**
**6-10-2-409, Inagehigashi**
**Chiba-shi Chiba(JP)**
Inventor: **Sakurai, Tadashi**
**1353-4, Shiizu**
**Ichihara-shi Chiba(JP)**
Inventor: **Yamaguchi, Noboru**
**1-9, Yushudainishi**
**Ichihara-shi Chiba(JP)**
Inventor: **Okada, Mitsuyuki**
**1-9, Yushudainishi**
**Ichihara-shi Chiba(JP)**
Inventor: **Asao, Kouichiro**
**135, Iriyamazu**
**Ichihara-shi Chiba(JP)**

(74) Representative: **Diamond, Bryan Clive et al**
**Gee & Co. Chancery House Chancery Lane**
**London WC2A 1QU(GB)**

(54) **Production of electrically conductive ethylene copolymer moldings.**

(57) A conductive plastic molding obtained by (a) melt molding an ethylene copolymer comprising 40 to 90% by weight of an ethylene unit, 10 to 60% by weight of at least one dialkylaminoalkyl (meth)acrylate comonomer unit represented by formula

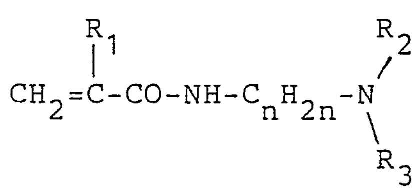

wherein $R_1$ is hydrogen or methyl; $R_2$ and $R_3$ each represents C1-4 alkyl; and n is an integer of 2 to 5; and up to 20% by weight of one or more ethylenically unsaturated comonomer units, the copolymer having a number average molecular weight of 5,000 to 50,000, and (b) impregnating, e.g. by immersion, at least 10 parts by weight of an aqueous solution of at least one organic acid, inorganic acid or inorganic metal salt into 100 parts by weight of the molding.

EP 0 293 087 A1

The molding, e.g. a sheet or fibre, exhibits excellent conductivity (e.g. $1 \times 10^{-4}$ - $5 \times 10^{-1}$ siemens/cm) and can be obtained easily and at low cost without limitation of its shape, and is usable as a heater or for fixing electrolyte liquor in a portable battery.

# PRODUCTION OF ELECTRICALLY CONDUCTIVE ETHYLENE COPOLYMER MOLDINGS

This invention relates to the production of an electrically conductive molding *from an ethylene* copolymer which is impregnated to render it conductive, and to the moldings thus produced.

The electrically conductive plastic moldings are known to be used as electromagnetic wave shields, antistatic materials or electrical plane heating elements for room heaters. They can also be used for fixation of an electrolyte liquor of a portable lead accumulator by taking advantage of their ionic conductivity. New uses are being found for them.

Known techniques for imparting conductivity to plastic moldings include compounding of a conductive substance, e.g., carbon black, metal powders, metallic fibers, etc. into a resin molding material, application of a coating containing a conductive substance to a resin molding, adhesion of a metal atom to a resin molding by ion plating or sputtering, and the like. In addition, various attempts have been made to render the resin per se electrically conductive.

However, these conventional techniques have their respective disadvantages as described below, and the resulting products are not always satisfactory depending on use.

In the method of dispersing a conductive substance in a resin before molding to obtain a conductive resin molding material, achievement of satisfactory conductivity requires a large quantity of the conductive substance to be compounded, which leads to adverse influences on molding properties of the resulting mixture and physical properties of the resin.

In applying a coating having incorporated therein a conductive substance onto a resin molding difficulty is encountered in uniformly applying the coating particularly on a molding of complicated shape. Moreover, the conductive layer formed on the surface of the molding is apt to fall off during long-term use.

The method comprising adhesion of a metal atom to the surface of a resin molding requires a special apparatus to carry out to thereby increase the cost.

Further, none of the so-far proposed resins showing conductivity by themselves have been put into practical use due to their poor molding properties.

On the other hand, in the field of portable storage batteries including lead accumulators which are utilized as vehicle batteries, there are many problems in handling and transportation because a fluid, such as dilute sulfuric acid, is employed as an electrolyte liquor.

In order to solve these problems, various attempts have been made to fix the electrolyte liquor. For example, there have been proposed a method of impregnating an electrolyte liquor into voids of glass cloth and a method of incorporating a gelling agent to an electrolyte liquor. These proposals, however, are still unsatisfactory as fixation or retention of the electrolyte liquor is insufficient and also the cell to be used is limited in shape and volume. Therefore there has been a need to develop an effective method for fixation of an electrolyte liquor for portable storage batteries.

One object of this invention is to eliminate various problems associated with the known conductive plastic moldings and to provide an ionically conductive plastic molding having excellent conductivity which can be obtained by molding with ease and can be fabricated into a complicated shape.

Another object of this invention is to provide a process for producing the above-described conductive plastic molding easily and at low cost.

In the light of the above objects, the inventors have conducted intensive and extensive researches on molding resins having excellent molding properties as well as excellent receptivity to an organic or inorganic acid aqueous solution, an inorganic metal salt aqueous solution or a mixture thereof upon contact therewith to provide a conductive molding. As a result, it has now been found that a copolymer comprising ethylene and a dialkylaminoalkylacrylamide comonomer effectively meets the purposes.

The present invention relates to the production of a conductive plastic molding by (a) melt molding an ethylene copolymer comprising from 40 to 90% by weight of an ethylene unit, from 10 to 60% by weight of at least one dialkylaminoalkylacrylamide comonomer unit represented by formula (I):

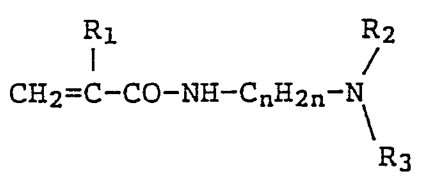

(I)

wherein $R_1$ represents a hydrogen atom or a methyl group; $R_2$ and $R_3$ each represents an alkyl group

having from 1 to 4 carbon atoms; and n represents an integer of from 2 to 5, and up to 20% by weight of one or more ethylenically unsaturated comonomer units, and having a number average molecular weight of from 5,000 to 50,000, and (b) impregnating at least 10 parts by weight of an aqueous solution of at least one of an organic acid, an inorganic acid and an inorganic metal salt into 100 parts by weight of the resulting melt molded article.

The present invention further relates to the thus produced conductive plastic molding.

The ethylene copolymer which can be used as a molding resin in the present invention may be prepared by any process, but is generally prepared by a high-pressure polymerization process, in which ethylene and a dialkylaminoalkylacrylamide are copolymerized in the presence of a radical polymerization initiator at a temperature of from 100 to 300 °C under a pressure of from 500 to 3,000 kg/cm$^2$. The polymerization may be carried out in a batch system, a semi-continuous system, or a continuous system. The continuous system is industrially advantageous.

Specific examples of the dialkylaminoalkylacrylamide comonomer are dimethylaminoethylacrylamide, dimethylaminopropylacrylamide, dimethylaminobutylacrylamide, diethylaminoethylacrylamide, diethylaminopropylacrylamide, diethylaminobutylacrylamide, dipropylaminoethylacrylamide, dipropylaminopropylacrylamide, dipropylaminobutylacrylamide, N-(1,1-dimethyl-3-dimethylaminopropyl)-acrylamide and N-(2-methyl-3-dimethylaminopropyl)acrylamide; and methacrylamide derivatives corresponding to these acrylamides. Of these, preferred are dimethylaminopropylacrylamide, dimethylaminopropylmethacrylamide, dimethylaminoethylacrylamide and dimethylaminoethylmethacrylamide.

The content of the dialkylaminoalkylacrylamide comonomer unit in the ethylene copolymer ranges from 10 to 60%, and preferably from 10 to 50%, by weight. If it is less than 10% by weight, the resulting molding cannot be sufficiently impregnated with an aqueous solution of an organic acid and/or an inorganic acid, and/or an inorganic metal salt, thus failing to manifest excellent conductivity.

On the other hand, if the content of the dialkylaminoalkylacrylamide comonomer unit exceeds 60% by weight, the ethylene copolymer has so high hydrophilic properties that the resulting molding may have reduced mechanical strength when immersed in the aqueous solution of an organic acid and/or an inorganic acid, and/or an inorganic metal salt and, in some cases, ultimately dissolved in the aqueous solution.

Specific and preferred examples of the other ethylenically unsaturated comonomer which may be used in this invention include methyl acrylate, methyl methacrylate, ethyl acrylate, ethyl methacrylate, n-butyl acrylate, n-butyl methacrylate, glycidyl acrylate, glycidyl methacrylate, vinyl acetate, vinyl propionate, dimethylaminoethyl methacrylate, dimethylaminoethyl acrylate, Particularly preferred of them are methyl acrylate, methyl methacrylate, ethyl acrylate, vinyl acetate, dimethylaminoethyl methacrylate, and dimethylaminoethyl acrylate.

The content of the ethylenically unsaturated comonomer unit in the ethylene copolymer should not exceed 20% by weight, and preferably not exceed 15% by weight.

The ethylene copolymer in this invention has a number average molecular weight of from 5,000 to 50,000 ($[\eta]=0.29\text{-}1.23$), and preferably from 8,000 to 40,000 ($[\eta]=0.39\text{-}1.07$) as calculated from the intrinsic viscosity $[\eta]$ measured at 135 °C in a tetralin solution according to the following equation:

$$[\eta] = 1.35 \times 10^{-3}\ \overline{M}\ n^{0.63}$$

wherein $[\eta]$ is the intrinsic viscosity; and $\overline{M}$ n is a number average molecular weight [cf. I. Harris, Journal of Polymer Science, Vol. 8 (4), 353-364 (1952)].

If the $\overline{M}$ n of the ethylene copolymer exceeds 50,000, the molding cannot be sufficiently impregnated with the aqueous solution of inorganic acid, organic acid and/or an inorganic metal salt, thus lacking excellent conductivity. If it is less than 5,000, the resulting molding suffers from not only shortage of mechanical strength but also lack of shape retention when impregnated with the aqueous solution.

The terminology "plastic molding" or "resin molding" as used herein means molded products obtained by molding the above-described ethylene copolymer by commonly employed molding processes, such as extrusion molding, injection molding, blow molding, vacuum molding, and the like, in which are included tubing, sheeting, filming, and spinning. The form of the molding is not particularly limited and includes, for example, films, sheets, tubes, rods, fibers (inclusive of hollow fibers), nonwoven fabric, woven fabric, etc. The fibers may be conjugate fibers with other resins, e.g., polypropylene, a polyester, polyamide, polyethylene, etc., and the nonwoven and woven fabric may be those obtained from such conjugate fibers.

Further, the resin molding according to the present invention embraces composites or laminates composed of the above recited moldings and other materials, such as metals (e.g., stainless steel, lead, etc.), other resins or rubbers (e.g., polyethylene, polypropylene, ethylene-propylene rubber, etc.), glass, and the like.

In the present invention, the resin molding is rendered electrically conductive by contacting it with an

impregnating aqueous solution containing at least one of inorganic acids, organic acids, and inorganic metal salts by immersion or the like impregnation technique.

The inorganic acids to be used include, for example, hydrochloric acid, sulfuric acid, nitric acid, phosphoric acid, pyrophosphoric acid, polyphosphoric acid, perchloric acid, hydrofluoric acid, hydrobromic acid and hydroiodic acid.

The organic acids include carboxylic acids, e.g., formic acid, acetic acid, oxalic acid, tartaric acid, benzoic acid, lactic acid, acrylic acid and maleic acid, and sulfonic acids, e.g., methanesulfonic acid and benzenesulfonic acid.

The inorganic metal salts to be used are selected from those easily soluble in water or an acidic aqueous solution and include ferrous chloride, ferric chloride, nickel chloride, ferrous sulfate, ferric sulfate, nickel sulfate, ferrous nitrate, ferric nitrate and nickel nitrate.

The concentration of the inorganic metal salt in the aqueous solution is arbitrary so long as it is within its solubility in water or an inorganic acid aqueous solution. The concentration of the inorganic acid may be either low as in a 0.01N sulfuric acid or high as in a 70% by weight sulfuric acid. The concentration of the organic acid aqueous solution may be as desired chosen within the range of solubility of the organic acid.

The upper limit of the amount of the above-described aqueous solution to be impregnated in the molding is necessarily determined by the content of the dialkylaminoalkylacrylamide comonomer unit in the ethylene copolymer and the molecular weight of the copolymer, while the lower limit is 10 parts by weight per 100 parts by weight of the molding. If the impregnated amount is less than 10 parts, sufficient conductivity cannot be attained.

The temperature and time for the contact between the molding and the impregnating aqueous solution, for example, immersion, can be selected according to the desired conductivity, the desired pick-up of the impregnating liquor, and the shape of the molding. For instance, treatment for a molding having a relatively large surface area, such as films, fibers, nonwoven fabric or woven fabric, etc., can be completed at a relatively low temperature for a short period of time, e.g., at 25 °C for 1 hour or less. With a molding having a relatively small surface area, such as thick sheets, tubes or rods, the contact temperature may be raised, e.g., to 60 °C, to complete the treatment in a short period of time, e.g., 1 hour or less.

The ethylene copolymer used in the present invention is not limited in shape and has excellent receptivity to the above-described aqueous solution upon contact therewith, to easily provide a plastic molding exhibiting superior electrical conductivity. In addition, the conductive plastic moldings of the present invention are flame retardant and self-extinguishing, and can be dyed in a desired color with an acid dye or a metallized acid dye.

The conductive plastic molding according to the present invention enjoys many advantages over those obtained by conventional techniques and, therefore, can be used in a wider range of the uses described above, including fixation of an electrolyte liquor of a portable lead accumulator.

The invention is now illustrated in greater detail with reference to Examples and Comparative Examples, but the invention is not limited thereto. In these examples, percentages are by weight unless otherwise indicated.

## EXAMPLE 1

An ethylene copolymer containing 57% of an ethylene unit and 43% of a dimethylaminopropylacrylamide unit and having a number average molecular weight of 31,000 ($[\eta]=0.91$) and a melt index of 5 g/10 min as measured by a melt indexer at 125 °C was extrusion molded in a T-die extruder having a diameter of 20 mm at a resin temperature of 155 °C to prepare a continuous sheeting of 7.3 cm in width and 2.1 mm in thickness. A sample piece (4 cm × 4.5 cm) was cut out from the sheeting and immersed in 200 ml of a 0.1N hydrochloric acid aqueous solution at 60 °C for 2 hours to obtain an impregnated resin sheet having a pick-up (based on the weight of the resin before impregnation) of 174%.

The conductivity of the impregnated resin was found to be $3 \times 10^{-4}$ siemens/cm as measured by the use of a four-point probe resistivity meter (manufactured by Mitsubishi Petrochemical Company, Ltd.).

EXAMPLES 2 TO 13

Extruded sheetings having a thickness of 2.1 mm or 1.0 mm were prepared in the same manner as in Example 1, and a cut piece of each sheeting was immersed in an aqueous solution containing at least one of an organic acid, an inorganic acid, and an inorganic metal salt as shown in Table 1 to obtain a conductive resin sheet.

The pick-up and conductivity of the resulting impregnated resin sheet were determined in the same manner as in Example 1, and the results obtained are shown in Table 1.

EXAMPLES 14 AND 15

An ethylene copolymer containing 64% of an ethylene unit and 36% of a dimethylaminopropylacrylamide unit and having a number average molecular weight of 12,000 ($[\eta]=0.50$) and a melt index of 20 g/10 min at 125° C was molded in a T-die extruder having a diameter of 20 mm at a resin temperature of 155° C to prepare a continuous sheeting of 7.3 cm in width and 2.1 mm in thickness. A sample piece (4 cm × 4.5 cm) was cut out of the sheeting and immersed in an inorganic acid aqueous solution as shown in Table 1. The pick-up and conductivity of the resulting sheet are shown in Table 1.

EXAMPLES 16 AND 17

An ethylene copolymer containing 61% of an ethylene unit, 25% of a dimethylaminopropylmethacrylamide unit, and 14% of a dimethylaminoethyl methacrylate unit and having a number average molecular weight of 24,200 ($[\eta]=0.78$) and a melt index of 8 g/10 min at 125° C was extrusion molded in the same manner as in Example 1 to prepare a sheeting. The resulting sheeting was immersed in an inorganic acid aqueous solution as shown in Table 1 to obtain a conductive sheet. The pick-up and conductivity of the resulting impregnated sheet are shown in Table 1.

TABLE 1

| Example No. | Resin Sample | | | | Immersion Condition | | | | Result | |
|---|---|---|---|---|---|---|---|---|---|---|
| | Comonomer | Content (wt%) | $\bar{M}n$ | Thickness (mm) | solution | Concentration | Temperature (°C) | Time (hr) | Pick-up (wt%) | Conductivity (siemens/cm) |
| 1 | Dimethylamino-propylacrylamide | 43 | 31000 | 2.1 | hydrochloric acid | 0.1N | 60 | 2 | 174 (137)* | $3\times10^{-4}$ |
| 2 | " | " | " | " | hydrochloric acid | 0.1N | " | " | 125 (98) | $1\times10^{-4}$ |
| | | | | | ferric chloride | 0.2 mol/ℓ | | | | |
| 3 | " | " | " | " | hydrochloric acid | 0.1N | 25 | 24 | 147 (129) | $4\times10^{-4}$ |
| 4 | " | " | " | 1.0 | " | " | " | 4 | 138 (131) | $4\times10^{-4}$ |
| 5 | " | " | " | 2.1 | nitric acid | 0.1N | 60 | 2 | 125 (95) | $2\times10^{-4}$ |
| 6 | " | " | " | " | sulfuric acid | 0.1N | 60 | 2 | 86 (71) | $3\times10^{-4}$ |
| 7 | " | " | " | 2.1 | " | 50% | " | " | 173 (102) | $2\times10^{-2}$ |
| 8 | " | " | " | " | " | 70% | " | " | 152 (84) | $5\times10^{-2}$ |
| 9 | " | " | " | 1.0 | " | 50% | " | 1 | 225 (135) | $2\times10^{-2}$ |

/To be cont'd.

TABLE 1 (cont'd)

| Example No. | Resin Sample: Comonomer | Resin Sample: Content (wt%) | Resin Sample: $\bar{M}n$ | Resin Sample: Thickness (mm) | Immersion Condition: solution | Immersion Condition: Concentration | Immersion Condition: Temperature (°C) | Immersion Condition: Time (hr) | Result: Pick-up (wt%) | Result: Conductivity (siemens/cm) |
|---|---|---|---|---|---|---|---|---|---|---|
| 10 | Dimethylamino-propylacrylamide | 43 | 31000 | 2.1 | phosphoric acid | 0.1N | 60 | 2 | 135 (110)* | $3\times10^{-4}$ |
| 11 | " | " | " | " | acetic acid | 0.05N | " | 0.5 | 265 (257) | $7\times10^{-3}$ |
| 12 | " | " | " | " | acrylic acid | 0.05N | " | " | 236 (227) | $5\times10^{-3}$ |
| 13 | " | " | " | " | ferric sulfate | 2 mol/ℓ | " | 4 | 70 (58) | $5\times10^{-4}$ |
| 14 | " | 36 | 12000 | " | hydrochloric acid | 0.1N | " | " | 69 (54) | $2\times10^{-4}$ |
| 15 | " | " | " | " | sulfuric acid | 50% | " | " | 115 (72) | $8\times10^{-2}$ |
| 16 | Dimethylamino-propylmeth-acrylamide/di-methylaminoethyl methacrylate | 20/15 | 24200 | " | hydrochloric acid | 0.1N | " | " | 55 (46) | $5\times10^{-4}$ |
| 17 | " | " | " | " | sulfuric acid | 50% | " | " | 103 (69) | $2\times10^{-2}$ |

Note: * Values in the parentheses each indicates a degree of swelling (% by volume)

EXAMPLE 18

The same ethylene copolymer as used in Example 1 (ethylene unit content: 57%; dimethylaminopropylacrylamide unit content: 43%) was spun in a simplified spinning apparatus composed of a melt indexer combined with a winding machine to prepare a filament yarn having an average diameter of 60 µm. The filaments were gathered and heat-pressed at 75 °C to prepare a porous sheet having a density of 0.35 g/cm$^3$ and a void of 62% by volume. The porous sheet was immersed in a 50% sulfuric acid aqueous solution at 25 °C for 30 minutes.

The resulting impregnated sheet was found to have absorbed in its resinous portion the 50% sulfuric acid aqueous solution in an amount of 2.2 times the weight of the resin before impregnation while stably retaining the 50% sulfuric acid aqueous solution in an amount of 2.3 times the weight of the resin before impregnation in its voids. The electrical conductivity of the impregnated sheet was $5 \times 10^{-1}$ siemens/cm.

COMPARATIVE EXAMPLES 1 TO 3

Each of the sample pieces as prepared in Examples 1, 14, and 16 was immersed in pure water at 60 °C for 2 hours. The resulting impregnated sheets were found to have a pick-up of 2.7%, 1.7%, and 1.5%, respectively, and a conductivity of $10^{-7}$ siemens/cm or less as measured by means of a four-point probe resistivity meter in each case or a conductivity of $8 \times 10^{-10}$, $6 \times 10^{-10}$, and $3 \times 10^{-10}$ siemens/cm, respectively, as measured by means of an ultra-megohm meter (manufactured by Toa Denpa Kogyo K.K.). These results are tabulated in Table 2 below.

TABLE 2

| Comparative Example No. | Resin Sample | | | | Immersion Condition | | | Result | |
|---|---|---|---|---|---|---|---|---|---|
| | Comonomer | Content (wt%) | $\bar{M}n$ | Thickness (mm) | solution | Temperature (°C) | Time (hr) | Pick-up (wt%) | Conductivity* (siemens/cm) |
| 1 | Dimethylamino-propylacrylamide | 43 | 31000 | 2.1 | pure water | 60 | 2 | 2.7 (2.2)** | $8\times10^{-10}$ |
| 2 | " | 36 | 12000 | " | " | " | " | 1.7 (1.4) | $6\times10^{-10}$ |
| 3 | Dimethylamino-propyl meth-acrylamide/di-methylaminoethyl methacrylate | 20/15 | 24200 | " | " | " | " | 1.5 (1.3) | $3\times10^{-10}$ |

Note: *: Measured by the use of a super insulation tester (manufactured by Toa Denpa Kogyo K.K.)

**: Values in the parentheses each indicates a degree of swelling (% by volume)

As described above, the present invention provides an ionically conductive plastic molding which has excellent electrical conductivity and can be fabricated in any complicated shape, and is free from various disadvantages of the conventional conductive plastic moldings. The present invention further provides a process for producing such a conductive plastic molding, in which a resin molding material can be molded easily and at low cost.

## Claims

1. A process for producing a conductive plastic molding which comprises

(a) melt molding an ethylene copolymer having a number average molecular weight of from 5,000 to 50,000 and comprising from 40 to 90% by weight of an ethylene unit, from 10 to 60% by weight of at least one dialkylaminoalkylacrylamide comonomer unit represented by the formula

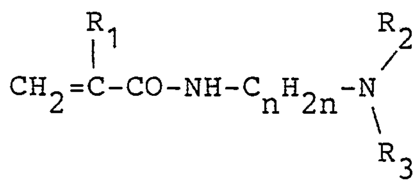

wherein $R_1$ represents a hydrogen atom or a methyl group; $R_2$ and $R_3$ each represents an alkyl group having from 1 to 4 carbon atoms; and n represents an integer of from 2 to 5,
and up to 20% by weight of said copolymer of one or more ethylenically unsaturated comonomer units and

(b) impregnating at least 10 parts by weight of an aqueous solution of at least one of an organic acid, an inorganic acid and an inorganic metal salt into 100 parts by weight of the resulting melt molding.

2. A process as claimed in Claim 1, wherein the dialkylaminoalkylacrylamide comonomer is at least one selected from dimethylaminopropylacrylamide, dimethylaminopropylmethacrylamide, dimethylaminoethylacrylamide and dimethylaminoethylmethacrylamide.

3. A process as claimed in Claim 1 or 2, wherein the ethylenically unsaturated comonomer is at least one selected from methyl acrylate, ethyl acrylate, methyl methacrylate, vinyl acetate, dimethylaminoethyl methacrylate and dimethylaminoethyl acrylate.

4. A process as claimed in Claim 1, 2 or 3, wherein said number average molecular weight of the copolymer used is 8,000 to 49,000.

5. A process as claimed in any preceding claim, wherein the content of the unsaturated comonomer unit is up to 15% by weight.

6. A process as claimed in any preceding claim, wherein the content of the acrylamide comonomer unit in the copolymer is 10 to 50% by weight.

7. An electrically conductive copolymer molding made by a method as claimed in any preceding claim.

8. A molding as claimed in Claim 7, having an electrical conductivity of $1 \times 10^{-4}$ to $5 \times 10^{-1}$ siemens/cm.

9. A molding as claimed in Claim 7 or 8, in the form of an electromagnetic wave shield, antistatic material, heating element or component of an electrical storage battery.

European Patent Office

# EUROPEAN SEARCH REPORT

Application Number

EP 88 30 3814

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 623 901 (MITSUBISHI) * Whole document * ----- | 1,9 | H 01 B 1/12 |
| | | | TECHNICAL FIELDS SEARCHED (Int. Cl.4) |
| | | | H 01 B 1/00 |

The present search report has been drawn up for all claims

| Place of search | Date of completion of the search | Examiner |
|---|---|---|
| THE HAGUE | 22-08-1988 | DROUOT M.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)